(19)

Europäisches
Patentamt
European
Patent Office
Office européen
des brevets

(11) **EP 3 418 909 A1**

(12) **EUROPEAN PATENT APPLICATION**

(43) Date of publication:
**26.12.2018 Bulletin 2018/52**

(51) Int Cl.:
***G06F 17/30*** *(2006.01)*

(21) Application number: **17305749.8**

(22) Date of filing: **19.06.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Thomson Licensing
92130 Issy-les-Moulineaux (FR)**

(72) Inventors:
• **MONSIFROT, Antoine
 35576 CESSON-SÉVIGNÉ (FR)**
• **LE SCOUARNEC, Nicolas
 35576 CESSON-SÉVIGNÉ (FR)**

(74) Representative: **Vidon Brevets & Stratégie
16B, rue de Jouanet
BP 90333
35703 Rennes Cedex 7 (FR)**

(54) **A METHOD FOR ACCESSING A KEY IN A CUCKOO HASH TABLE**

(57)    A hash table is the data structure of choice for tracking connections in firewalls or network address translators for example. In a hash table, each key is mapped to a primary bucket of the hash table and to a secondary bucket. This ensures that subsequent lookups require only to look into two buckets in order to retrieve the key. In networking context, it may be important to support efficient lookups for both existing entries, positive lookups, and non-existing entries, negative lookups depending on the considered networking function. A method according to the invention allows positive lookups and negative lookups to be performed with a single memory access. Such a method allows performance to remain stable for mixed batches of positive and negative lookups and offers high performance. In order to access memory only once, even for negative lookups, the hash table is augmented with a probabilistic filter.

Fig. 4

**Description**

TECHNICAL FIELD

The present invention relates to open-addressing hash tables which are commonly used for storing data in routers, or for firewalls and network address translations algorithms.

The invention concerns more particularly cuckoo hash tables and the accessing of a key stored in such an open-addressing hash table.

BACKGROUND

Computer networks and Internet accesses rely on network processing functions such as firewalls, routers and network address translation. In these network processing functions, the use of hash tables is pervasive. A hash table is the data structure of choice for tracking connections in firewalls or network address translators for example.

A hash table associates a key, e.g., 5-tuple composed of protocol, IP (Internet Protocol) addresses and ports, ethernet addresses, with a value, e.g., allow/deny decision, IP address to use for a translation, etc. In this context, one of the main advantages of hash tables is that hash tables only require a small, constant number of memory accesses from a CPU (Central Processing Unit) to retrieve a value associated with a given key. Thus, hash tables are well adapted for tracking large numbers of flows/connections.

A specific type of hash tables are open-addressing hash tables. These open-addressing hash tables are composed of several buckets, each bucket comprising a fixed number of key/value slots. An example of such an open-addressing hash is a Cuckoo hash table.

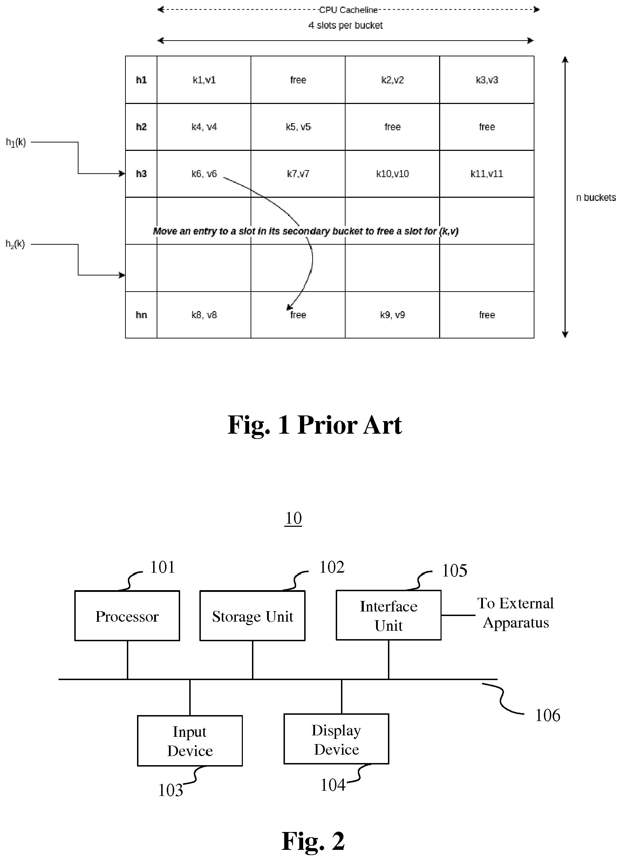

In a Cuckoo hash table as represented on **figure 1,** each key (k) is mapped to a primary bucket or row of the Cuckoo hash table, indexed by a first hash $h_1(k)$ of the key k, and to a secondary bucket or row indexed by a second hash $h_2(k)$ of the key k, the first and the second hash of the key being computed using two independent hash functions $h_1$ and $h_2$ respectively. To store a new key-value entry (k,v) in the Cuckoo hash table, a free slot is searched in the primary bucket, if none is found, a free slot is searched in the secondary bucket. The position of the key-value entry (k,v) in the Cuckoo hash table is given by the bucket and the slot in said bucket in which the key-value entry (k,v) is actually stored.

If no free slot is found in the secondary bucket, an entry (k6,v6) stored in its primary bucket is moved to its secondary bucket $h_2(k6)$ to free a slot for the key-value entry (k,v). This procedure applies recursively if all slots in the bucket indexed by $h_2(k6)$ are occupied. This insertion procedure ensures that subsequent lookups require only to look into two buckets respectively indexed by $(h_1(k), h_2(k))$. For these reasons, a Cuckoo hash table has good performance : lookups require a small amount of memory accesses. Furthermore, in most cases, when there are 4 or 8 slots per bucket, 95-99% of the key-value entries are stored in their primary bucket, thus allowing to perform lookups with only one memory access.

When tracking or classifying a large number of connections, network processing functions use relatively large hash tables which cannot be stored into the cache of the CPU. Each access to the hash table translates into a RAM (Random Access Memory) access, which needs up to 250 CPU cycles. To mitigate this issue lookups of open-addressing hash tables may be performed in batches, i.e. for multiple values at once while prefetching, i.e., inform the CPU that address $h_1(k)$ is to be read. Such a combination allows the CPU to efficiently pipeline multiple lookups and to remain busy while waiting for the result of the memory accesses.

The prefetch can either be limited to the primary bucket only or be issued for both the primary and the secondary bucket. When prefetching is executed only for the primary position, good performance for searching for existing entries in the open-addressing hash table, or positive lookups, are achieved. However, the performance is reduced when the entry is not in the hash table as the secondary bucket must be read to check that is the entry is not stored in this one either. When prefetching is executed for both the primary and the secondary bucket, the cost of accessing the secondary bucket is limited but efficiency for positive lookups is reduced as reading the secondary bucket is useless if the entry is found in the primary bucket, which is the case for 95-99% of lookups.

In networking context, it may be important to support efficient lookups for both existing entries, positive lookups, and non-existing entries, negative lookups depending on the considered networking function. Indeed, firewalling, for example, consists precisely in determining if an entry exists or not.

The present invention has been devised with the foregoing in mind.

SUMMARY OF INVENTION

According to a first aspect of the invention there is provided a method for accessing a key stored in a hash table, said key can be stored at least in a primary position or in a secondary position in said hash table, said primary and secondary positions being indexed by, respectively, a first hash of the key and a second hash of the key determined based on two distinct hash functions, in case the key is not stored in the primary position indexed by the first hash of the key, said method comprising:

-  performing a lookup of a probabilistic filter, associated to the primary position of the key, using the second hash of the key to determine if the key can be stored in said secondary position, said probabilistic filter comprising information about the storage of the key in said secondary position,

- determining if the key is stored in the secondary position when the result of the lookup of the probabilistic filter returns information indicating that the key can be stored in said secondary position.

The method according to the invention allows positive lookups and negative lookups to be performed with a single memory access. Such a method allows performance to remain stable for mixed batches of positive and negative lookups and offers high performance.

In order to access memory only once, even for negative lookups, the hash table is augmented with a probabilistic filter.

A probabilistic filter is a very compact data-structure used to indicate that a key k, which primary position in the hash table is indexed by the first hash of the key might be stored into its secondary position in the hash table indexed by the second hash of the key. This probabilistic filter allows false positives, but no false negatives. That is to say, if the probabilistic filter returns information indicating that the key is not stored in its secondary position, then there is no need to check the secondary position. Probabilistic filters generally require a few hash computations.

During a lookup, the primary position indexed by the first hash of the key is accessed. As the key is not stored in its primary position, a lookup is performed in the probabilistic filter. If the probabilistic filter replies positively, the secondary position is checked as the key may be stored in its secondary position.

According to an embodiment of the invention, when the result of the lookup of the probabilistic filter returns information indicating that the key is not stored in said secondary position, the presence of the key in the secondary position indexed by the second hash of the key is not determined.

If the probabilistic filter replies negatively, then there is no need to check the secondary position of the key thus saving a memory access. Indeed, during a lookup, the primary position indexed by the first hash of the key is accessed. As the key is not stored in its primary position, a lookup is performed in the probabilistic filter. If the probabilistic filter replies negatively, there is no need to check the secondary position, thus saving a memory access.

According to an embodiment of the invention, the hash table is a cuckoo hash table.

According to an embodiment of the invention, the probabilistic filter is a Bloom filter.

A probabilistic filter is a very compact data-structure used to indicate that a key k, might be stored or not in its secondary position.

According to an embodiment of the invention, the lookup of the probabilistic filter to determine if the key can be stored in said secondary position is performed using the second hash of the key.

In the method according to the invention, the second hash of the key may be re-used to save computation.

According to an embodiment of the invention, a row of said hash table has a same size as a line of cache of a central processing unit, said row comprising the primary position of a plurality of keys having the same hash determined based on the same hash function, and said probabilistic filter.

Since the probabilistic filter is stored on the same cache line as the positions of keys having a same hash, accessing the probabilistic filter does not require more memory access as accessing the positions of the keys, thus ensuring good performance.

Indeed, the size of a row of the hash table is the same as the size of a CPU cache line (the basic unit of memory management for the CPU). When performing a memory access, the main cost is accessing the cache line.

According to an embodiment of the invention, the method further comprises updating said probabilistic filter when said key is stored in the secondary position, by:

- storing, in said probabilistic filter associated to the primary position, information about the storage of the key in said secondary position, and

- incrementing a counter of said probabilistic filter associated to the primary position of the key.

The issue that arises with probabilistic filters is that they only support adding elements, or require more memory to count element and allow deletion.

As elements are moved back to their primary position, or deleted, the probabilistic filter should be kept up to date. But there is a limit on the size of the probabilistic filter: it fits in the same cache line as the rows of the hash table.

To solve this issue, the probabilistic filter embeds a counter that indicates how many keys moved to their secondary position have been inserted in the probabilistic filter.

According to an embodiment of the invention, the method further comprises, when the key is no longer stored in the secondary position:

- decrementing said counter of said probabilistic filter associated to the primary position of the key.

The key is no longer stored in its secondary position either because the key is deleted from the hash table or because the key has been moved and stored back in its primary position.

According to an embodiment of the invention, when a value of said counter is equal to zero, the probabilistic filter associated to the primary position of the key is reset.

The counter is continuously kept up to date and whenever it reaches zero, meaning that no key mapping to the current primary position has been moved to its secondary position, the whole probabilistic filter is reset to empty.

Another object of the invention concerns a processor capable of accessing a key stored in a hash table, said key can be stored at least in a primary position or in a secondary position in said hash table, said primary and secondary positions being indexed by, respectively, a first hash of the key and a second hash of the key determined based on two distinct hash functions, in case the key is not stored in the primary position indexed by the first hash of the key, said processor being configured to:

- perform a lookup of a probabilistic filter using the second hash of the key to determine if the key can be stored in said secondary position, said probabilistic filter comprising information about the storage of the key in said secondary position,

- determine if the key is stored in the secondary position when the result of the lookup of the probabilistic filter returns information indicating that the key can be stored in said secondary position.

According to an embodiment of the invention, when the result of the lookup of the probabilistic filter returns information indicating that the key is not stored in said secondary position, the presence of the key in the secondary position indexed by the second hash of the key is not determined.

According to an embodiment of the invention, a row of said hash table has a same size as a line of cache of a central processing unit, said row comprising the primary position of a plurality of keys having the same hash determined based on the same hash function, and said probabilistic filter.

According to an embodiment of the invention, the processor further comprises updating said probabilistic filter when said key is stored in the secondary position, by:

- storing, in said probabilistic filter associated to the primary position, information about the storage of the key in said secondary position, and

- incrementing a counter of said probabilistic filter associated to the primary position of the key.

Another object of the invention concerns a device embedding processor capable of accessing a key stored in a hash table, said key can be stored at least in a primary position or in a secondary position in said hash table, said primary and secondary positions being indexed by, respectively, a first hash of the key and a second hash of the key determined based on two distinct hash functions, in case the key is not stored in the primary position indexed by the first hash of the key, said processor being configured to:

- perform a lookup of a probabilistic filter using the second hash of the key to determine if the key can be stored in said secondary position, said probabilistic filter comprising information about the storage of the key in said secondary position,

- determine if the key is stored in the secondary position when the result of the lookup of the probabilistic filter returns information indicating that the key can be stored in said secondary position.

Some processes implemented by elements of the invention may be computer implemented. Accordingly, such elements may take the form of an entirely hardware embodiment, an entirely software embodiment (including firmware, resident software, micro-code, etc.) or an embodiment combining software and hardware aspects that may all generally be referred to herein as a "circuit", "module" or "system'. Furthermore, such elements may take the form of a computer program product embodied in any tangible medium of expression having computer usable program code embodied in the medium.

Since elements of the present invention can be implemented in software, the present invention can be embodied as computer readable code for provision to a programmable apparatus on any suitable carrier medium. A tangible carrier medium may comprise a storage medium such as a floppy disk, a CD-ROM, a hard disk drive, a magnetic tape device or a solid state memory device and the like. A transient carrier medium may include a signal such as an electrical signal, an electronic signal, an optical signal, an acoustic signal, a magnetic signal or an electromagnetic signal, e.g. a microwave or RF signal.

BRIEF DESCRIPTION OF THE DRAWINGS

Embodiments of the invention will now be described, by way of example only, and with reference to the following drawings in which:

Figure 1 represents a Cuckoo hash table according to the prior art,
Figure 2 represents a device embedding a processor capable of executing the method according to an embodiment of the invention,
Figure 3 is a flow chart for explaining a process for accessing a key stored in a Cuckoo hash table according to an embodiment of the invention,
Figure 4 is a flow chart for explaining a process for keeping the probabilistic filter up to date according to an embodiment of the invention,
Figures 5 and 6 represent Cuckoo hash table according to different embodiments of the invention.

DETAILED DESCRIPTION

As will be appreciated by one skilled in the art, aspects of the present principles can be embodied as a system, method or computer readable medium. Accordingly, aspects of the present principles can take the form of an entirely hardware embodiment, an entirely software embodiment, (including firmware, resident software, micro-code, and so forth) or an embodiment combining software and hardware aspects that can all generally be referred to herein as a "circuit", "module", or "system". Furthermore, aspects of the present principles can take the form of a computer readable storage medium. Any combination of one or more computer readable storage medium(a) may be utilized.

The invention concerns a method for performing positive lookups and negative lookups in an open-addressing hash table with a single memory access. In order to achieve this goal, according to an embodiment of the invention, a Cuckoo hash table is augmented with a probabilistic filter.

**Figure 2** represents a device 10 embedding a processor capable of executing the method according to an embodiment of the invention.

The device 10 may comprise at least one hardware processor 101, a storage unit 102, an input device 103, a display device 104, and an interface unit 105, connected by a bus 106. Of course, constituent elements of the device 10 may be connected by a connection other than a bus connection.

The processor 101 controls operations of the device 10. The storage unit 102 stores at least one program capable of accessing a key stored in a Cuckoo hash table to be executed by the processor 101, and various data, such as parameters used by computations performed by the processor 101, intermediate data of computations performed by the processor 101, and so on. The processor 101 may be formed by any known and suitable hardware, or software, or a combination of hardware and software. For example, the processor 101 may be formed by dedicated hardware such as a processing circuit, or by a programmable processing unit such as a CPU *(Central Processing Unit)* that executes a program stored in a memory thereof.

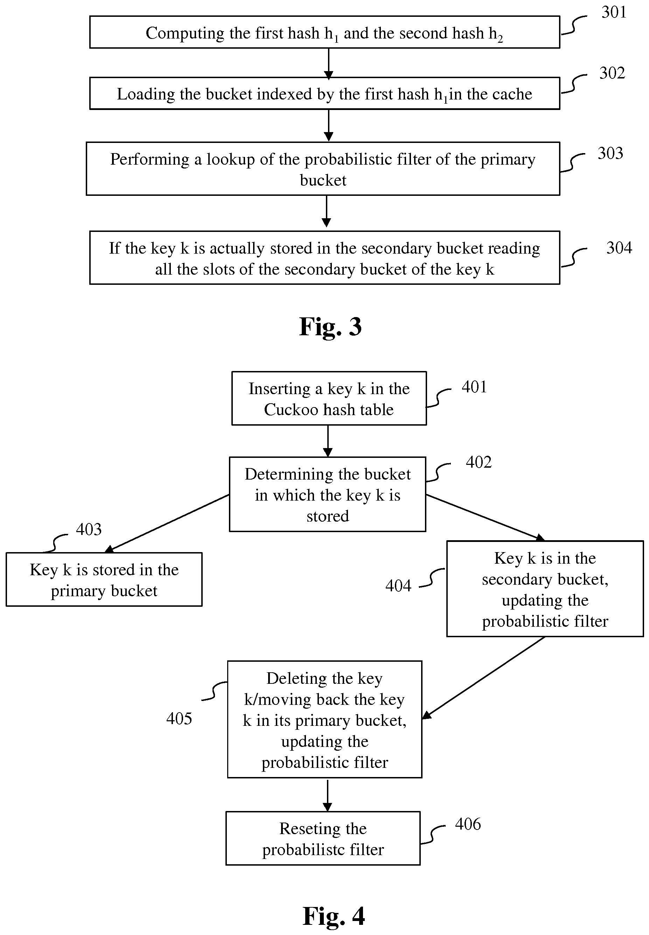

The storage unit 102 may be formed by any suitable storage or means capable of storing the program, data, or the like in a computer-readable manner. Examples of the storage unit 102 include non-transitory computer-readable storage media such as semiconductor memory devices, and magnetic, optical, or magneto-optical recording media loaded into a read and write unit. The program causes the processor 101 to perform a process according to an embodiment of the present disclosure as described hereinafter with reference to figure 3.

The input device 103 may be formed by a keyboard, a pointing device such as a mouse, or the like for use by the user to input commands, to make user's selections of parameters used for selecting the transmission interface to be used. The display device 104 may be formed by a display device to display, for example, a Graphical User Interface (GUI). The input device 103 and the output device 104 may be formed integrally by a touchscreen panel, for example.

The interface unit 105 provides an interface between the device 10 and an external apparatus. The interface unit 105 may be communicable with the external apparatus via cable or wireless communication.

**Figure 3** is a flow chart for explaining a process for accessing a key stored in a Cuckoo hash table according to an embodiment of the invention.

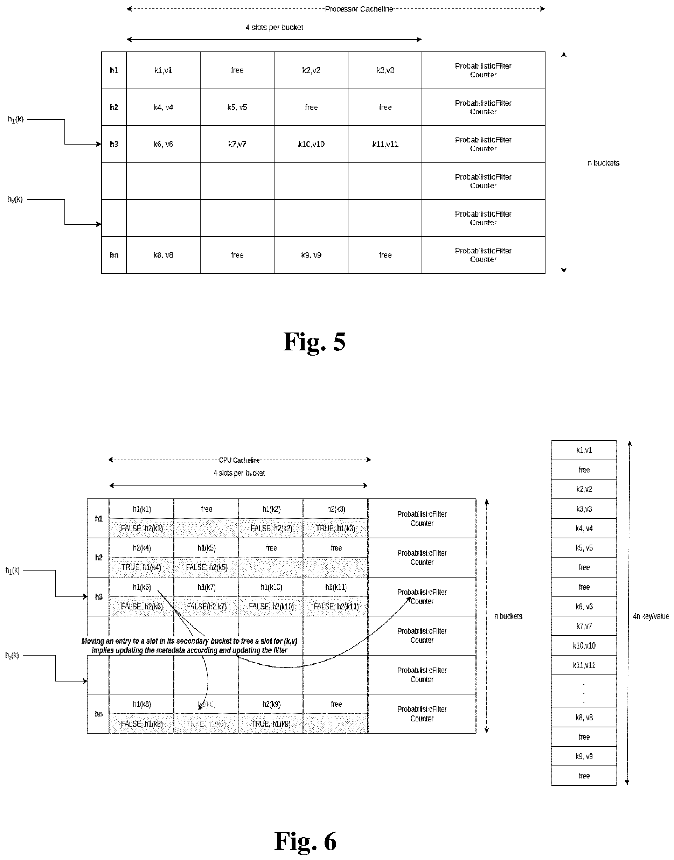

Such a Cuckoo hash table is represented on **figure 5 and 6.** The Cuckoo hash table comprises a plurality of rows or buckets. Each bucket comprises four slots in which a key k may be stored, as well as a probabilistic filter counter. Each bucket of the Cuckoo hash table has the same size, e.g. 64 bytes, as a cache line of the processor 101. In another embodiment of the invention, the key k together with its value v are stored in a slot of the Cuckoo hash table. In another embodiment of the invention, a fingerprint of the key k (as shown in figure 6) may be stored in a slot of the Cuckoo hash table. In this embodiment, the fingerprint of the keys points toward a second table storing the keys and their associated values.

Each bucket of the Cuckoo hash table is identified by an index hn, $n \in \mathbb{N}$ corresponding to a hash of a key k to be stored in a slot of the Cuckoo hash table. A first hash of a key k $h_1$ is computed based on a first hash function. The first hash $h_1$ of the key k identifies a primary position of the k in the Cuckoo hash table. Then the key k may be stored in one of the slot of the bucket indexed by the first hash $h_1$ of the key k. A second hash of a key k $h_2$ is computed based on a second hash function. The second hash $h_2$ of the key k identifies a secondary position of the k in the Cuckoo hash table. Then the key k may be stored in one of the slot of the bucket indexed by the second hash $h_2$ of the key k. The first hash function and the second hash function are independent hash functions.

To insert a new key k in the Cuckoo hash table, a free slot in the primary bucket indexed by the first hash $h_1$ of the key k must be find. If no free slot is found in the primary bucket, then a free slot is searched in the secondary bucket indexed by the second hash $h_2$ of the key k. In the case where no free slot is found in the secondary bucket of the key k, then another key stored in the same primary bucket as the key k may be stored in its secondary bucket in order to free a slot in the primary bucket.

A probabilistic filter is a very compact data-structure used to indicate that a key k, which primary bucket is indexed by the first hash $h_1$ of the key k might be stored into its secondary bucket indexed by the second hash $h_2$ of the key k. This probabilistic filter allows false positives, i.e. indicating that the key may be stored in its secondary bucket but is actually not stored in its secondary bucket; but no false negatives, i.e. if the probabilistic filter returns information indicating that the key is not stored in its secondary bucket, then there is no need to check the secondary bucket.

Back to figure 3, in order to access a key k in a Cuckoo hash table, the processor 101 computes the first hash $h_1$ and the second $h_2$ in a step 301.

In a step 302, the whole bucket of the Cuckoo hash table indexed by the first hash $h_1$ of the key k is loaded in the cache of the processor 101 and each slot of the bucket is read in order to find the key k.

In case the key k is not stored in one of the slots of its primary bucket, then a lookup of of the probabilistic filter of the primary bucket is performed in a step 303.

Such a lookup may use the second hash $h_2$ of the key k to determine if the key k can be stored in said its secondary bucket, based on information about the storage of the key k in its secondary bucket stored in the probabilistic filter. Since the key k may not be available when moving entries in the Cuckoo hash table, the probabilistic filter should be updated by reusing the second hash $h_2$ of the key k, such an embodiment has the advantage of increasing the performance of the method according to the invention. For example, the second hash $h_2$ of the key k is a 32 bit hash, and the probabilistic filter is a 32 or 64-bits Bloom filter. For a 32 bit hash of the key k, six independent values of 5 bits may be extracted and used to index the Bloom filter.

When the probabilistic filter returns information indicating that the key k may be stored in the secondary bucket, the processor 101 determines if the key k is actually stored in the secondary bucket by reading all the slots of the secondary bucket of the key k in a step 304.

When the probabilistic filter returns information indicating that the key k is not stored in said secondary bucket, the presence of the key in the secondary bucket indexed by the second hash $h_2$ of the key is not determined.

**Figure 4** is a flow chart for explaining a process for keeping the probabilistic filter up to date according to an embodiment of the invention.

The issue that arises with probabilistic filters is that they only support adding elements or require more memory to count element and allow deletion. As keys may be stored back to their primary bucket, or deleted, the probabilistic filter should be kept up to date. However, there is a strong limit on the size of the probabilistic filter used in an embodiment of our invention : the slots of a given bucket together with the probabilistic filter have the same size as a cache line of the processor 101. To solve this issue without consuming more memory with probabilistic supporting deletions, the probabilistic filter according to an embodiment of the invention has a counter that indicates how many keys stored in their secondary buckets have been inserted in the probabilistic filter.

Thus, in a step 401, a key k is inserted in the Cuckoo hash table. In a step 402, the processor 101 determines in which bucket of the Cuckoo hash table the key is stored.

When the key k is inserted in its primary bucket indexed by the first hash $h_1$ of the key k, which corresponds to step 403, the counter of the probabilistic filter is not impacted.

When the key k is inserted in its secondary bucket indexed by the second hash $h_2$ of the key k, or moved from its primary bucket to its secondary bucket, information about the storage of the key k in its secondary bucket is stored in the probabilistic filter and the counter of the probabilistic filter associated to the primary bucket of the key k is incremented by one in a step 404.

In a step 405, when the key k is deleted from its secondary bucket indexed by the second hash $h_2$ of the key k, or moved back from its secondary bucket to its primary bucket, information about the storage of the key k in its secondary bucket is removed from the probabilistic filter and the counter of the probabilistic filter associated to the primary bucket of the key k is decremented by one.

Whenever the counter of the probabilistic filter associated to the primary bucket of the key k reaches zero, meaning that no key with a primary hash function $h_1$ mapping to the current primary bucket has been moved to its secondary bucket, the whole probabilistic filter is reset to empty in a step 406.

When the Cuckoo hash table stores only fingerprints of keys, and not keys, as shown in figure **6**, additional metadata is required for performing the maintenance and move the keys properly between their primary and their secondary buckets.

This metadata consists of a Boolean index indicating in which bucket a key k is stored as well as information concerning the other bucket of the key k. For example, in figure 6, the key k6 is moved from its primary bucket indexed by the first hash $h_1$ of the key k6 to its secondary bucket indexed by the second hash $h_2$ of the key k6.

A Boolean index FALSE, means that the key currently stored in the slot, is stored into its primary bucket. A Boolean index TRUE, means that the key currently stored in the slot, is stored into its secondary bucket. Thus, when a key with a Boolean index FALSE is moved from one bucket to another, it is a "movement" from the primary bucket to the secondary bucket. The slot also stores information identifying in which bucket the key is to be moved. This information is the hash of the key indexing the bucket in which the key is to be stored in the example of figure 6 this information is the secondary hash $h_2(k6)$. The Boolean index is used to determine which "movement", i.e., primary bucket to secondary bucket or vice versa, is executed to update appropriately the probabilistic filter and its counter associated with the primary bucket of the key k6, i.e., adding/deleting the key and incrementing/decrementing the counter.

After the execution of the "movement", a Boolean index TRUE is stored in the slot of the secondary bucket of the key k6, indicating that the key k6 is stored in its secondary bucket and also stores the hash of the key indexing its primary bucket which is, in the example,

the primary hash $h_1(k6)$ of the key k6.

The Boolean index gives information about how to update probabilistic filters and their counters when keys are moved within a Cuckoo hash table. The fingerprint associated to this Boolean index is used to know in which bucket to move the key and which bucket's probabilistic filter is to be updated.

This additional metadata may be stored in the same cache line as the fingerprints of the keys, or in an additional cache line, leveraging the fact that the processor 101 can efficiently prefetch two adjacent cache lines and the fact that this additional metadata is not used during lookups

Although the present invention has been described hereinabove with reference to specific embodiments, the present invention is not limited to the specific embodiments, and modifications will be apparent to a skilled person in the art which lie within the scope of the present invention.

Many further modifications and variations will suggest themselves to those versed in the art upon making reference to the foregoing illustrative embodiments, which are given by way of example only and which are not intended to limit the scope of the invention, that being determined solely by the appended claims. In particular the different features from different embodiments may be interchanged, where appropriate.

**Claims**

1. A method for accessing a key stored in a hash table, said key can be stored at least in a primary position or in a secondary position in said hash table, said primary and secondary positions being indexed by, respectively, a first hash of the key and a second hash of the key determined based on two distinct hash functions, in case the key is not stored in the primary position indexed by the first hash of the key, said method comprising:

   - performing a lookup of a probabilistic filter, associated to the primary position of the key to determine if the key can be stored in said secondary position, said probabilistic filter comprising information about the storage of the key in said secondary position,
   - determining if the key is stored in the secondary position when the result of the lookup of the probabilistic filter returns information indicating that the key can be stored in said secondary position.

2. The method according to claim 1 wherein when the result of the lookup of the probabilistic filter returns information indicating that the key is not stored in said secondary position, the presence of the key in the secondary position indexed by the second hash of the key is not determined.

3. The method according to any of the preceding claims wherein the hash table is a Cuckoo hash table.

4. The method according to any of the preceding claims wherein the probabilistic filter is a Bloom filter.

5. The method according to claim 1 wherein the lookup of the probabilistic filter to determine if the key can be stored in said secondary position is performed using the second hash of the key.

6. The method according to any of the preceding claims wherein a row of said hash table has a same size as a line of cache of a central processing unit, said row comprising the primary position of a plurality of keys having the same hash determined based on the same hash function, and said probabilistic filter.

7. The method according to any of the preceding claims further comprising updating said probabilistic filter when said key is stored in the secondary position, by:

   - storing, in said probabilistic filter associated to the primary position, information about the storage of the key in said secondary position, and
   - incrementing a counter of said probabilistic filter associated to the primary position of the key.

8. The method according to claim 6 further comprising, when the key is no longer stored in the secondary position:

   - decrementing said counter of said probabilistic filter associated to the primary position of the key.

9. The method according to claim 8 wherein when a value of said counter is equal to zero, the probabilistic filter associated to the primary position of the key is reset.

10. A processor capable of accessing a key stored in a hash table, said key can be stored at least in a primary position or in a secondary position in said hash table, said primary and secondary positions being indexed by, respectively, a first hash of the key and a second hash of the key determined based on two distinct hash functions, in case the key is not stored in the primary position indexed by the first hash of the key, said processor being configured to:

   - perform a lookup of a probabilistic filter to determine if the key can be stored in said secondary position, said probabilistic filter comprising information about the storage of the key in said secondary position,
   - determine if the key is stored in the secondary position when the result of the lookup of the probabilistic filter returns information indicating that the key can be stored in said secondary position.

11. The processor according to claim 10 wherein when the result of the lookup of the probabilistic filter returns information indicating that the key is not stored in said secondary position, the presence of the key in the secondary position indexed by the second hash of the key is not determined.

12. The processor according to any of claims 10 to 11, wherein a row of said hash table has a same size as a line of cache of a central processing unit, said row comprising the primary position of a plurality of keys having the same hash determined based on the same hash function, and said probabilistic filter.

13. The processor according to any of claims 10 to 12, further comprising updating said probabilistic filter when said key is stored in the secondary position, by:

    - storing, in said probabilistic filter associated to the primary position, information about the storage of the key in said secondary position, and
    - incrementing a counter of said probabilistic filter associated to the primary position of the key.

14. A device embedding processor capable of accessing a key stored in a hash table, said key can be stored at least in a primary position or in a secondary position in said hash table, said primary and secondary positions being indexed by, respectively, a first hash of the key and a second hash of the key determined based on two distinct hash functions, in case the key is not stored in the primary position indexed by the first hash of the key, said processor being configured to:

    - perform a lookup of a probabilistic filter to determine if the key can be stored in said secondary position, said probabilistic filter comprising information about the storage of the key in said secondary position,
    - determine if the key is stored in the secondary position when the result of the lookup of the probabilistic filter returns information indicating that the key can be stored in said secondary position.

15. A computer program **characterized in that** it comprises program code instructions for the implementation of the method according to any of claims 1 to 9 when the program is executed by a processor.

CPU Cacheline

4 slots per bucket

| | | | | |
|---|---|---|---|---|
| **h1** | k1,v1 | free | k2,v2 | k3,v3 |
| **h2** | k4, v4 | k5, v5 | free | free |
| **h3** | k6, v6 | k7,v7 | k10,v10 | k11,v11 |
| | *Move an entry to a slot in its secondary bucket to free a slot for (k,v)* | | | |
| | | | | |
| **hn** | k8, v8 | free | k9, v9 | free |

$h_1(k)$

$h_2(k)$

n buckets

# Fig. 1 Prior Art

10

# Fig. 2

| Computing the first hash $h_1$ and the second hash $h_2$ | 301 |

| Loading the bucket indexed by the first hash $h_1$ in the cache | 302 |

| Performing a lookup of the probabilistic filter of the primary bucket | 303 |

| If the key k is actually stored in the secondary bucket reading all the slots of the secondary bucket of the key k | 304 |

## Fig. 3

Inserting a key k in the Cuckoo hash table — 401

Determining the bucket in which the key k is stored — 402

403 — Key k is stored in the primary bucket

404 — Key k is in the secondary bucket, updating the probabilistic filter

405 — Deleting the key k/moving back the key k in its primary bucket, updating the probabilistic filter

Reseting the probabilistc filter — 406

## Fig. 4

Processor Cacheline

4 slots per bucket

| | | | | | |
|---|---|---|---|---|---|
| h1 | k1,v1 | free | k2,v2 | k3,v3 | ProbabilisticFilter Counter |
| h2 | k4, v4 | k5, v5 | free | free | ProbabilisticFilter Counter |
| h3 | k6, v6 | k7,v7 | k10,v10 | k11,v11 | ProbabilisticFilter Counter |
| | | | | | ProbabilisticFilter Counter |
| | | | | | ProbabilisticFilter Counter |
| hn | k8, v8 | free | k9, v9 | free | ProbabilisticFilter Counter |

$h_1(k)$

$h_2(k)$

n buckets

**Fig. 5**

CPU Cacheline

4 slots per bucket

| | | | | | |
|---|---|---|---|---|---|
| h1 | h1(k1) | free | h1(k2) | h2(k3) | ProbabilisticFilter Counter |
| | FALSE, h2(k1) | | FALSE, h2(k2) | TRUE, h1(k3) | |
| h2 | h2(k4) | h1(k5) | free | free | ProbabilisticFilter Counter |
| | TRUE, h1(k4) | FALSE, h2(k5) | | | |
| h3 | h1(k6) | h1(k7) | h1(k10) | h1(k11) | ProbabilisticFilter Counter |
| | FALSE, h2(k6) | FALSE(h2,k7) | FALSE, h2(k10) | FALSE, h2(k11) | |
| | | | | | ProbabilisticFilter Counter |
| | | | | | ProbabilisticFilter Counter |
| hn | h1(k8) | h2(k6) | h2(k9) | free | ProbabilisticFilter Counter |
| | FALSE, h1(k8) | TRUE, h1(k6) | TRUE, h1(k9) | | |

*Moving an entry to a slot in its secondary bucket to free a slot for (k,v) implies updating the metadata according and updating the filter*

$h_1(k)$

$h_2(k)$

n buckets

| |
|---|
| k1,v1 |
| free |
| k2,v2 |
| k3,v3 |
| k4, v4 |
| k5, v5 |
| free |
| free |
| k6, v6 |
| k7,v7 |
| k10,v10 |
| k11,v11 |
| . . . |
| k8, v8 |
| free |
| k9, v9 |
| free |

4n key/value

**Fig. 6**

Europäisches
Patentamt

European
Patent Office

Office européen
des brevets

# EUROPEAN SEARCH REPORT

Application Number

EP 17 30 5749

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 9 509 809 B2 (ALCATEL-LUCENT USA INC [US]) 29 November 2016 (2016-11-29)<br>* column 14, line 18 - line 21 *<br>* column 14, line 28 - line 50 *<br>* column 16, line 35 - line 52 *<br>* column 17, line 26 - line 39; figure 4 * | 1-15 | INV.<br>G06F17/30 |
| A | US 8 914 601 B1 (LETHIN RICHARD A [US] ET AL) 16 December 2014 (2014-12-16)<br>* column 2, line 26 - line 32 * | 1-15 | |
| A | LI FAN ET AL: "Summary cache", IEEE / ACM TRANSACTIONS ON NETWORKING, IEEE / ACM, NEW YORK, NY, US, vol. 8, no. 3, 1 June 2000 (2000-06-01), pages 281-293, XP058138913, ISSN: 1063-6692, DOI: 10.1109/90.851975<br>* page 287, column 1, paragraph 3 * | 1-15 | |
| A | RASMUS PAGH ET AL: "Cuckoo Hashing", LECTURE NOTES IN COMPUTER SCIENCE, 17 August 2001 (2001-08-17), pages 121-133, XP55198304,<br>* page 124 * | 1-15 | TECHNICAL FIELDS SEARCHED (IPC)<br><br>G06F |

The present search report has been drawn up for all claims

| Place of search | Date of completion of the search | Examiner |
|---|---|---|
| The Hague | 31 October 2017 | Androulidakis, Iosif |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 30 5749

This annex lists the patent family members relating to the patent documents cited in  the above-mentioned European search report.
The members are as contained in the European Patent Office EDP file on
The European Patent Office is in no way liable for these particulars which are merely given for the purpose of information.

31-10-2017

| Patent document cited in search report | | Publication date | Patent family member(s) | Publication date |
|---|---|---|---|---|
| US 9509809 | B2 | 29-11-2016 | NONE | |
| US 8914601 | B1 | 16-12-2014 | NONE | |

EPO FORM P0459

For more details about this annex : see Official Journal of the European Patent Office, No. 12/82